Europäisches Patentamt

European Patent Office

Office européen des brevets

(11) Veröffentlichungsnummer: **0 388 764**
**A1**

(12) **EUROPÄISCHE PATENTANMELDUNG**

(21) Anmeldenummer: **90104735.7**

(22) Anmeldetag: **13.03.90**

(51) Int. Cl.⁵: **A63B 49/08, B29C 61/02**

(30) Priorität: **20.03.89 DE 3909081**

(43) Veröffentlichungstag der Anmeldung:
**26.09.90 Patentblatt 90/39**

(84) Benannte Vertragsstaaten:
**AT BE CH DE ES FR GB IT LI NL SE**

(71) Anmelder: **RXS Schrumpftechnik-Garnituren GmbH**
**Profilstrasse 4**
**D-5800 Hagen 1(DE)**

(72) Erfinder: **Schneider, Reiner, Dipl.-Ing. (FH)**
**Flurstrasse 32**
**D-8624 Ebersdorf(DE)**
Erfinder: **Pieper, Detlef, Dr. Dipl.-Chem.**
**Am Rabersbach 18**
**D-8633 Rödenthal(DE)**
Erfinder: **Will, Horst**
**Tiefendorferstrasse 23**
**D-5800 Hagen 1(DE)**

(74) Vertreter: **Fuchs, Franz-Josef, Dr.-Ing. et al**
**Postfach 22 13 17**
**D-8000 München 22(DE)**

(54) **Umhüllung aus wärmeschrumpfendem Kunststoff.**

(57) Bei der Erfindung handelt es sich um eine Umhüllung (1, 4, 7, 9, 12, 13) aus wärmeschrumpfendem Kunststoff, wobei diese gasdurchlässig und feuchtigkeitsabsorbierend ausgebildet ist, eine griffige Oberfläche aufweist und durch Erwärmung rutschfest auf einem Gegenstand aufschrumpfbar ist.

FIG 4

EP 0 388 764 A1

Die Erfindung betrifft eine Umhüllung aus wärmeschrumpfendem Kunststoff.

Umhüllungen aus wärmeschrumpfbarem Material, zum Beispiel in Form von Schrumpfschläuchen, sind ganz allgemein bekannt. Diese besitzen jedoch eine relativ glatte Oberfläche und sind nicht gasdurchlässig. Aus diesem Grunde sind derartige Schrumpfschläuche für manche Anwendungsgebiete nicht recht geeignet, obwohl die Schrumpffähigkeit wünschenswert wäre. Solche Anwendungsgebiete sind vor allem dann gefragt, wenn die Überzüge von Gegenständen besonders griffig sein sollen, wie zum Beispiel bei Sportgeräten wie bei Tennisschlägern oder bei Überzügen von Handgriffen und dergleichen. Dieses Problem wird bisher meist durch Bewickeln der Griffstiele mit Bändern bewerkstelligt. Dabei ergeben sich durch die Bewicklung folgende Nachteile bzw. Probleme:
- die Bandenden werden sehr leicht beschädigt
- die Bewicklung verrutscht auf dem Gegenstand
- das Bewickeln muß mit großer Sorgfalt durchgeführt werden
- die Oberfläche erhält durch das Bewickeln eine unregelmäßige Struktur

So liegt dieser Erfindung die Aufgabe zugrunde, leicht aufbringbare Umhüllungen für Gegenstände zu schaffen, die die aufgezeigten Nachteile nicht aufweisen. Die gestellte Aufgabe wird gemäß der Erfindung mit einer Umhüllung der eingangs beschriebenen Art dadurch gelöst, daß sie gasdurchlässig und feuchtigkeitsabsorbierend ist, eine griffige Oberfläche aufweist und durch Erwärmung rutschfest auf einen Gegenstand aufschrumpfbar ist.

Die Erfindung sieht vor, Umhüllungen zu fertigen, die locker zum Beispiel auf einen Griffstiel aufgeschoben und durch Wärmezufuhr aufgeschrumpft werden können. Solche Umhüllungen bestehen aus Schlauchstücken, deren Länge mindestens der Länge der Gegenstände, zum Beispiel einem Griff, entspricht und deren Innendurchmesser vor dem Aufschrumpfen größer sind als der entsprechende Griffdurchmesser. Diese Umhüllungen bestehen entweder aus Schlauchstücken oder aus Formteilen, wie zum Beispiel Kappen. Die Umhüllungen aus Schrumpfschläuchen können zum Beispiel auch als Meterware zum Anwender gelangen und in diesem Fall kann dann der Anwender selbst das der Länge des zu umhüllenden Gegenstandes entsprechende Schlauchstück abschneiden. Für standardisierte Längen, wie zum Beispiel bei Tennisschlägern oder ähnlichen Gegenständen ist auch eine vorgefertigte Fixlänge günstig, da das Beschneiden von schrumpfbarem Material manchmal gewisse Probleme aufwirft. Eine Umhüllung gemäß der Erfindung kann einen ein- oder auch mehrschichtigen Aufbau aufweisen. Der einschichtige Aufbau kann auch aus einem wärmeschrumpfenden Integralschaum bestehen, bei dem zum Beispiel der Schäumungsgrad von innen nach außen zunimmt. Bei mehrschichtigen Aufbauten ist wenigstens eine Schicht aus einem vernetzten Kunststoff, der im erwärmten Zustand dehnbar ist und nach Abkühlung im gedehnten Zustand so lange gedehnt bleibt, bis er später beim Aufziehen wiederum erwärmt wird und dann schrumpft.

Gemäß der Erfindung läßt sich die gestellte Aufgabe durch andere alternative Ausführungsformen einer wärmeschrumpfenden Schicht ebenfalls lösen. So können anstelle einer homogenen, schrumpffähigen Schicht auch wärmeschrumpfende Elemente wie zum Beispiel Gitterfolien, Netze, Gewebe, Fäden, Ringe, Bänder oder ähnliche Elemente verwendet werden. Auch diese Elemente können einschichtig die Umhüllung bilden oder auch in einer Trägerschicht eingelagert sein. Sie können aber auch zum Beispiel bei mehrschichtigem Aufbau in der Umhüllung selbst integriert oder auch auf der Oberfläche der Umhüllung aufgebracht sein. Geeignete Kunststoffe für derartige schrumpffähige Schichten sind bevorzugt teilkristalline Thermoplaste, wie sie im folgenden aufgelistet sind:
- Polyethylen
- Copolymere des Ethylens mit
Ethylacetat oder Butylacrylat oder Acrylsäure oder Vinylacetat oder Propylen
- Terpolymere des Ethylens mit zwei dieser Comonomeren
- Terpolymere aus Ethylen, Propylen und einer konjugierten Dien
- Polypropylen
- Propylencopolymere
- Polyvinylchlorid
- Vinylchloridcopolymerisate
- Vinylchlorid-Pfropfpolymere

Solche genannten Thermoplaste können alleine oder auch in der Zusammensetzung als Blends aus zwei oder mehreren der genannten Beispiele verwendet werden. Zur Erzielung bestimmter Eigenschaften werden weitere polymere Kunststoffe und/oder Elastomere mit diesen Thermoplasten versetzt. Zum Beispiel erhöhen Elastomere die Haftfestigkeit auf dem zu umschrumpfenden Gegenstand. Auch sogenannte Tackifier, z.B. Polyisobutylen, erhöhen die Rutschfestigkeit.

Die Schrumpfeigenschaften werden in bekannter Weise durch eine Vernetzung der Kunststoffe bzw. Kunststoffmischungen erreicht, wobei die Umhüllungen anschließend geweitet und in diesem Zustand fixiert werden. Die Vernetzung wird vorzugsweise durch Elektronenbestrahlung in bekannter Weise erzielt. Es können aber auch andere übliche Vernetzungstechniken wie zum Beispiel peroxidische Vernetzungen oder Silanvernetzungen angewandt werden. Über den Vernetzungsgrad wird die Schrumpfkraft so eingestellt, daß der Überzug auf dem Stiel auch bei starker bestimmungsgemäßer Beanspruchung nicht verrutscht.

Vorzugsweise soll die Innenfläche der Umhüllung einen relativ hohen Reibwert zu dem zu umhüllenden Gegenstand aufweisen. Der Hafteffekt kann durch Haftkleberbeschichtung beliebig verstärkt werden.

Die äußere Oberfläche der Umhüllungen ist jeweils gemäß der Erfindung weich, griffig und offenporig verschäumt. Zur Erzielung einer weichen offenporigen Oberfläche besteht eine äußere Schicht zum Beispiel aus offenporig verschäumtem Polyurethan, wobei diese Schicht fest mit der inneren schrumpffähigen Schicht verbunden ist. Dabei kann auch die äußere Schicht schumpffähig sein, sie muß es jedoch nicht sein.

Im übrigen können die verwendeten Kunststoffe bzw. Kunststoffmischungen weitere Zusätze enthalten, wie Füllstoffe, Stabilisatoren, Verarbeitungshilfen, Farbpigmente und ähnliche Stoffe.

Bei mehrschichtigen Aufbauten der Umhüllungen können entweder die innere oder die äußere oder auch beide Schichten aus nicht wärmeschrumpfenden, aber elastisch verformbaren Materialien sein; wie zum Beispiel insbesondere vernetzte Elastomere oder thermoplastische Elastomere.

Für geeignete innere bzw. äußere Schichten aus vernetzten Plastomeren werden Mischungen auf der Basis von Synthese-Kautschuken verwendet, wie zum Beispiel:

ACM - Acrylatkautschuk
CR - Chloropremkautschuk
CSM - Chlorsulfoniertes Polyethylen
EPDM - Ethylenpropylen-Ther-Monomer-Kautschuk
EPR - Ethylenpropylen-Kautschuk
EVA - Ethylen-Venyl-Acetat-Copolymer
IIR - Butyl-Kautschuk
NBR - Acrylnitril-Butadien-Kautschuk
SBR - Styrol-Butadien-Kautschuk

Außerdem sind auch Natur-Kautschukmischungen verwendbar. Als thermoplastische Elastomere können sowohl Blockpolymere, zum Beispiel SEBS (Styrol-Ethylen-Butylen-Styrol), PUR (Polyurethan), Copolyester und Copolyamide als auch mehrphasige Polyblends, zum Beispiel Polyolefin/Elastomer-Blends oder Alcryn verwendet werden.

Die äußere Schicht wird bevorzugt offenporig ausgeführt; wobei die offenporige Struktur durch chemische oder physikalische Verschäumung bewerkstelligt wird. Eine besonders offenporige Struktur wird erreicht, wenn in der Polymer- bzw. Elastomermatrix eine niedermolekulare Substanz, z.B. ein Wachs, eingemischt wird, die nach der Formgebung wieder entfernt werden kann, zum Beispiel durch Auswaschen bzw. Herauslösen. Übrig bleibt dann nur das Polymer-Gerüst mit extremer Offenporigkeit. Die erforderliche Vernetzung kann vor oder nach dem Entfernen dieser Substanz erfolgen.

Die Erfindung wird nun anhand von sechs Figuren näher erläutert.

Figur 1 zeigt einen einschichtigen Schrumpfschlauch.

Figur 2 zeigt einen zweischichtigen Schrumpfschlauch.

Figur 3 zeigt einen Schrumpfschlauch mit unterschiedlichem Verschäumungsgrad.

Figur 4 deutet an, daß die Umhüllung als Meterware oder als einseitig geschlossene Kappen ausgebildet sein können.

Figur 5 zeigt eine Umhüllung mit längsverlaufenden Elementen.

Figur 6 zeigt eine Umhüllung mit gitterförmig angeordneten Elementen.

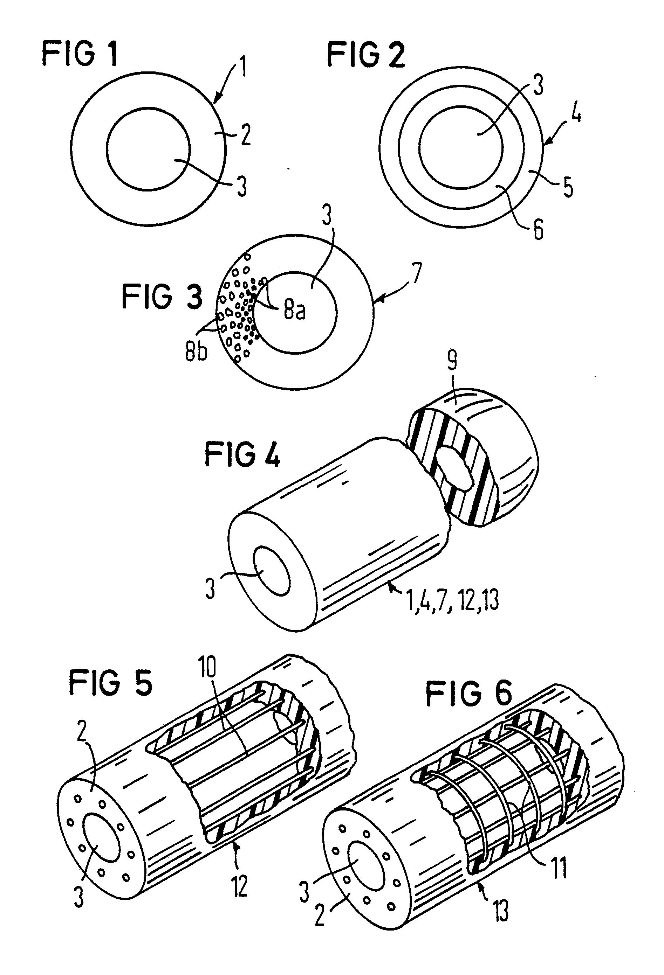

Die Figur 1 zeigt eine Umhüllung 1 aus einer einzigen Schicht 2, die alle geforderten Eigenschaften, nämlich Schrumpffähigkeit, Gasdurchlässigkeit, Feuchtigkeitsabsorbtion und griffige Oberfläche, aufweist. Weiterhin ist das Innere 3 der Umhüllung 1 so bemessen, daß sie mühelos über den zu umhüllenden Gegenstand aufgezogen werden kann. Anschließend wird sie durch Wärmezufuhr rutschfest auf den umhüllten Gegenstand aufgeschrumpft. Die hierfür verwendeten Materialien sowie die Formgebung und Herstellung sind bereits beschrieben.

Die Figur 2 zeigt eine Umhüllung 4, die aus mehreren Schichten 5 und 6 besteht und die fest haftend miteinander verbunden sind. Eine dieser Schichten 5 oder 6 weist im wesentlichen Schrumpfeigenschaften auf, während die jeweils andere Schicht dann die weiteren erforderlichen Eigenschaften gemäß der Erfindung aufweist. Diese Teilung hat den Vorzug, daß die Eigenschaften dann optimal auf die jeweilige Schicht verteilt werden können. Bezüglich des Innenraums 3 gilt das bereits Gesagte.

Die Figur 3 zeigt als weiteres Ausführungsbeispiel gemäß der Erfindung eine Umhüllung 7, bei der ein sogenannter Integralschaum verwendet wird. Dies bedeutet, daß das gesamte Material die erforderlichen und bereits beschriebenen Eigenschaften aufweist, wobei diese Eigenschaften vorzugsweise durch einen verschieden starken Verschäumungsgrad des Materials erreicht werden. So ist beispielsweise die innere, schrumpfbare Schicht 8a weniger verschäumt als die äußere Schicht 8b, bei der zum Beispiel die Offenporigkeit im Vordergrund zu stehen hat. Durch entsprechende Verschäumungsvariationen lassen sich für die einzelnen Anwendungsfälle entsprechend optimale Ergebnisse erzielen. Gute Ergebnisse ergeben sich zum Beispiel, wenn der Verschäumungsgrad von innen nach außen stetig anwächst bis zum Beispiel auf 50% im äußeren Bereich.

Die Figur 4 soll verdeutlichen, daß die Umhüllungen 1, 4, 7, 12 oder 13 entweder als Meterware, oder als Abschnitte ausgebildet sein können, daß aber auch Formteile gebildet werden können, die beispielsweise kappenartige Abschlüsse 9 aufweisen.

In Figur 5 wird eine Umhüllung 12 angedeutet, in deren Wandung zwei zum Beispiel längsverlaufende Einlagen 10 in Form von Fäden, Bändern oder ähnlichen Elementen eingesetzt sind. Diese längsverlaufenden Elemente können lediglich verstärkenden Maßnahmen dienen, wobei diese vorzugsweise zugfest ausgebildet sind und somit eine gewisse Maßhaltigkeit in Längsrichting gewährleisten. Dies ist besonders günstig, wenn eine Schrumpfung in Längsrichtung verhindert werden soll. Es können jedoch die se längsverlaufenden Elemente 10 auch als Wärmeschrumpfelemente ausgebildet sein, so daß diese die Schrumpffunktion übernehmen.

Die Figur 6 zeigt eine weitere Umhüllung 13, in deren Wandung 2 ebenfalls Zusatzelemente 11 eingelagert sind. Hier soll angedeutet werden, daß diese Zusatzelemente 11 in Form einer Gitterfolie, eines Netzes, oder eines Gewebes eingelagert werden können und somit in ähnlicher Weise Funktionen übernehmen wie sie in der Figur 5 erläutert wurden. Außerdem ist auch die Möglichkeit gegeben nur ringförmige Elemente einzulagern, so daß die gezeichneten Längselemente entfallen. Diese Ausführungsform hat besondere Bedeutung, wenn diese Ringe aus schrumpfbaren Elementen gebildet werden, so daß hierdurch eine gleichmäßige radiale Schrumpfung erzielt werden kann.

Die wärmeschrumpfenden Elemente können ebenfalls ein- oder mehrschichtig angeordnet werden oder auch in einer verzellten Schicht eingelagert werden. Weiterhin kann eine zusätzliche verzellte Schicht, z.B. aus einem offenporigen Polyurethanschaum angeordnet sein.

## Ansprüche

1. Umhüllung aus wärmeschrumpfendem Kunststoff,
**dadurch gekennzeichnet,**
daß sie (1, 4, 7, 12, 13) gasdurchlässig und feuchtigkeitsabsorbierend ist, eine griffige Oberfläche aufweist und durch Erwärmung rutschfest auf einen Gegenstand aufschrumpfbar ist.

2. Umhüllung nach Anspruch 1,
**dadurch gekennzeichnet,**
daß sie (9) aus einem zylindrischen Formteil besteht und an einem Ende kappenförmig abgeschlossen ist.

3. Umhüllung nach Anspruch 1,
**dadurch gekennzeichnet,**
daß sie (1, 4, 7, 12, 13) aus einem Abschnitt von einem längeren, beidseits offenen Schlauch gebildet ist.

4. Umhüllung nach einem der vorhergehenden Ansprüche,
**dadurch gekennzeichnet,**
daß sie (1, 4, 7, 12, 13, 9) aus durchgehend porösem Material besteht.

5. Umhüllung nach einem der Ansprüche 1 bis 3,
**dadurch gekennzeichnet,**
daß sie (7) aus einem Integralschaum mit vorzugsweise von innen nach außen anwachsenden Verschäumungsgrad, vorzugsweise bis auf 50% besteht und vorzugsweise mit wärmeschrumpfenden Eigenschaften versehen ist.

6. Umhüllung nach einem der vorhergehenden Ansprüche,
**dadurch gekennzeichnet,**
daß sie (4) aus mehreren Schichten (5, 6) besteht.

7. Umhüllung nach einem der vorhergehenden Ansprüche,
**dadurch gekennzeichnet,**
daß das wärmeschrumpfende Element aus einem thermoplastischen Werkstoff oder einer thermoplastischen Werkstoffmischung be steht und daß diese durch Vernetzung erlangte wärmeelastische Eigenschaften aufweisen.

8. Umhüllung nach einem der vorhergehenden Ansprüche,
**dadurch gekennzeichnet,**
daß das wärmeschrumpfende Element aus Polyethylen besteht.

9. Umhüllung nach Anspruch 7,
**dadurch gekennzeichnet,**
daß das wärmeschrumpfende Element aus Co- oder Terpolymeren des Ethylens besteht.

10. Umhüllung nach Anspruch 7,
**dadurch gekennzeichnet,**
daß das wärmeschrumpfende Element aus Co- oder Terpolymeren des Propylens besteht.

11. Umhüllung nach Anspruch 7,
**dadurch gekennzeichnet,**
daß das wärmeschrumpfende Element aus Blends der Polymere nach Anspruch 9 und/oder Anspruch 10 besteht.

12. Umhüllung nach Anspruch 7,
**dadurch gekennzeichnet,**
daß das wärmeschrumpfende Element chemisch mittels Peroxiden oder Silanen vernetzt ist.

13. Umhüllung nach Anspruch 7,
**dadurch gekennzeichnet,**
daß das wärmeschrumpfende Element physikalisch durch energiereiche Strahlen vernetzt ist.

14. Umhüllung nach einem der Ansprüche 6 bis 13,
**dadurch gekennzeichnet,**
daß die wärmeschrumpfende Schicht ein Treibmittel enthält, das eine Verschäumung des Kunststoffmaterials vor, während oder nach der Vernetzung bewirkt.

15. Umhüllung nach einem der vorhergehenden Ansprüche,
**dadurch gekennzeichnet,**
daß die wärmeschrumpfende Schicht einen die Rutschfestigkeit erhöhenden Zusatz von Elastomeren und/oder sogenannten Tackifiern, insbesondere Polyisobutylen, enthält.

16. Umhüllung nach einem der vorhergehenden Ansprüche,
**dadurch gekennzeichnet,**
daß die wärmeschrumpfende Schicht in ihrer Polymer- bzw. Elastomermatrix eine niedermolekulare Substanz, vorzugsweise ein Wachs enthält, durch die ein offenporiger Schaum erreicht wird, wobei diese Substanz nach der Formgebung wieder entfernbar ist, vorzugsweise durch Auswaschen oder Herauslösen.

17. Umhüllung nach Anspruch 16,
**dadurch gekennzeichnet,**
daß die Vernetzung vor der Entfernung der Substanz erfolgt ist.

18. Umhüllung nach Anspruch 16,
**dadurch gekennzeichnet,**
daß die Vernetzung nach dem Entfernen der Substanz erfolgt ist.

19. Umhüllung nach einem der vorhergehenden Ansprüche,
**dadurch gekennzeichnet,**
daß das wärmeschrumpfende Element als Gitterfolie, Netz oder Gewebe ausgebildet ist.

20. Umhüllung nach einem der Ansprüche 1 bis 18,
**dadurch gekennzeichnet,**
daß das wärmeschrumpfende Element aus Fäden oder Bändern oder als Gelege derselben gebildet ist.

21. Umhüllung nach einem der Ansprüche 1 bis 18,
**dadurch gekennzeichnet,**
daß das wärmeschrumpfende Element aus rinförmig angeordneten Elementen gebildet ist.

22. Umhüllung nach einem der vorhergehenden Ansprüche,
**dadurch gekennzeichnet,**
daß das wärmeschrumpfende Element in einer verzellten Schicht eingebettet ist.

23. Umhüllung nach einem der vorhergehenden Ansprüche,
**dadurch gekennzeichnet,**
daß das wärmeschrumpfende Element mehrschichtig angeordnet ist.

24. Umhüllung nach einem der vorhergehenden Ansprüche,
**dadurch gekennzeichnet,**
daß eine verzellte Schicht aus einem offenporigen Polyurethanschaum angeordnet ist.

25. Umhüllung nach einem der vorhergehenden Ansprüche,
**dadurch gekennzeichnet,**
daß auf der Innenseite eine rutschhemmende Schicht, vorzugsweise aus einem bei Wärme reagierenden Kleber, angeordnet ist.

FIG 1

FIG 2

FIG 3

FIG 4

FIG 5

FIG 6

| EINSCHLÄGIGE DOKUMENTE | | | EP 90104735.7 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | US - A - 4 547 414 <br> (EGUCHI) <br> * Gesamt * <br> -- | 1,3,7 <br> 8,9,10 | A 63 B 49/08 <br> B 29 C 61/02 |
| A | CH - A - 295 762 <br> (HAGEN) <br> * Gesamt * <br> -- | 1,3,7 | |
| A | GB - A - 2 124 089 <br> (NAKAMATSU) <br> * Seite 1, Zeilen 105-107; Fig. 25-28; Seite 3, Zeilen 93-105 * <br> -- | 1 | |
| A | DE - B2 - 2 250 096 <br> (RAYCHEM CORP.) <br> * Gesamt * <br> -- | 1 | |
| A | DE - A1 - 2 940 719 <br> (KABEL- UND METALLWERKE GUTENHOFFNUNGSHÜTTE AG) <br> * Gesamt * <br> -- | 1 | RECHERCHIERTE SACHGEBIETE (Int. Cl.⁵) |
| A | CH - A - 508 471 <br> (RAYCHEM CORP.) <br> * Gesamt * <br> ---- | 1 | A 63 B 49/00 <br> A 63 B 53/00 <br> A 63 B 59/00 <br> B 29 C 61/00 <br> B 29 C 65/00 |

Der vorliegende Recherchenbericht wurde für alle Patentansprüche erstellt.

| Recherchenort | Abschlußdatum der Recherche | Prüfer |
|---|---|---|
| WIEN | 22-06-1990 | BRÄUER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82